# EUROPEAN PATENT SPECIFICATION

(11) **EP 4 116 561 B1**
(45) Date of publication and mention of the grant of the patent: **07.05.2025**
(21) Application number: 22193985.3
(22) Date of filing: 25.09.2013
(51) Int. Cl.: F02C 9/26, F23R 3/30, F23R 3/26

(54) **MODEL BASED FUEL-AIR RATIO CONTROL**
MODELLBASIERTE STEUERUNG DES KRAFTSTOFF-LUFT-VERHÄLTNISSES
CONTRÔLE DE RAPPORT AIR/CARBURANT BASÉ SUR UN MODÈLE

(30) Priority: 28.09.2012 US 201213631394
(43) Date of publication of application: 11.01.2023
(62) Divisional of application: 13868840.3
(73) Proprietor: RTX Corporation, Farmington, CT 06032 (US)
(72) Inventor: MEISNER, Richard P., Glastonbury, CT (US); WINEBRENNER, Brian V., Tolland, CT (US); FEULNER, Matthew R., West Hartford, CT (US); KARPMAN, Boris, Marlborough, CT (US); MA, David L., Avon, CT (US)
(74) Representative: Dehns

(56) References cited:
- GB-A- 2 474 761
- US-A- 5 596 871
- US-A1- 2004 200 206
- US-A1- 2008 243 352
- US-A1- 2012 017 600

## Description

### BACKGROUND

The present invention relates generally to gas turbine engine control, and more, particularly to lean blowout avoidance by model based fuel-air ratio control.

Modern Brayton and Ericsson cycle engines, including gas turbine engines for aircraft applications, continue to grow more complex. These engines require sophisticated control systems to handle increasing operational demands at reduced tolerances. Such engine control systems command engine actuators for control parameters such as estimated fuel-air ratio rate and variable engine geometries to achieve desired values of output parameters such as net thrust or engine rotor speed. A variety of control methods are currently used toward this end, including model-based control algorithms using predictive models that relate thermodynamic parameters such as flow rate, pressure, and temperature to input and output variables such as overall thrust, power output, or rotational energy.

Engine control systems are typically provided with a plurality of inputs including both current operating parameters and target parameters. Current operating parameters may include engine parameters such as rotor speeds, engine temperatures, and flow rates, as well as environmental parameters such as altitude and inlet total air pressure and air temperature. Some current operating parameters are directly measured, while others may be fixed at manufacture or estimated based on measured parameters. Target parameters may include desired rotor speeds or net thrust values specified according to desired aircraft activities.

In addition to achieving specified target parameters, engine control systems are expected to avoid engine trajectories resulting in engine states that unduly reduce component lifetimes or increase likelihoods of undesired events such as engine surge, compressor stall, or engine blowout. Lean combustor blowout, in particular, occurs when the fuel-air ratio (FAR) in the combustor of a gas turbine engine falls sufficiently that the combustor flame is extinguished. Conventional systems manage FAR indirectly, for example by limiting the fuel-sensed combustor pressure ratio, so as to avoid lean blowout conditions. Gas turbine engine control is disclosed in US 2008/243352 A1, US 5 596 871 A, US 2004/200206 A1 and GB 2474761 A.

### SUMMARY

The present invention is directed toward a gas turbine engine as defined by claim 1 and a method for controlling a gas turbine engine as defined by claim 5.

### BRIEF DESCRIPTION OF THE DRAWINGS

FIG. 1 is a simplified cross-sectional view of a gas turbine engine.
FIG. 2 is a schematic block diagram of a fuel-air ratio (FAR) control system for the gas turbine engine of FIG. 1.
FIG. 3 is a flowchart of a method performed by the FAR control system of FIG. 2.

### DETAILED DESCRIPTION

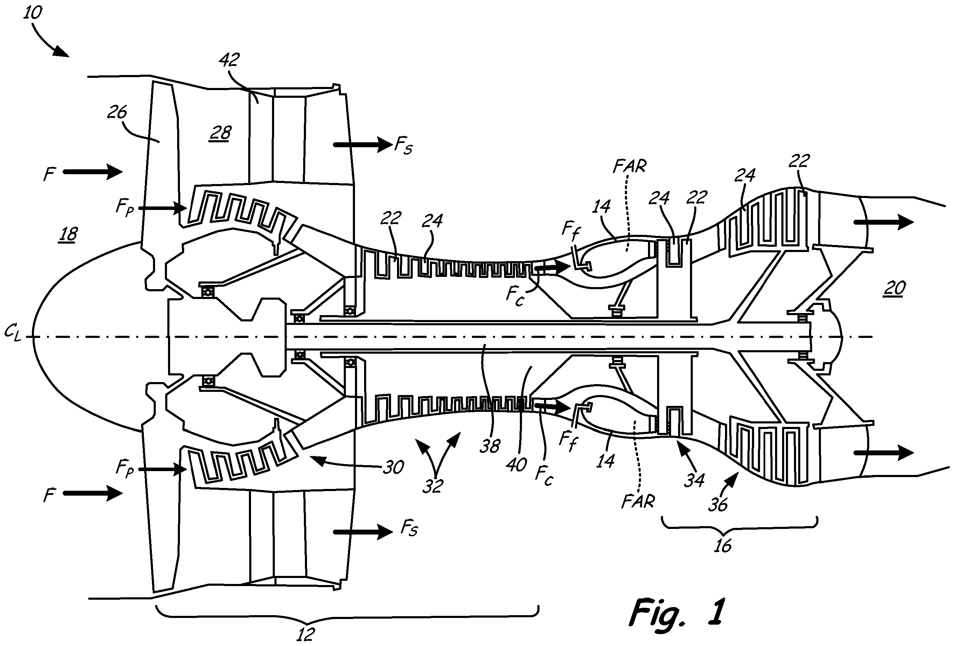

FIG. 1 is a cross-sectional view of gas turbine engine 10. Gas turbine engine 10 comprises compressor section 12, combustor 14, and turbine section 16 arranged in flow series between upstream inlet 18 and downstream exhaust 20. Compressor section 12 and turbine section 16 are arranged into a number of alternating stages of rotor airfoils (or blades) 22 and stator airfoils (or vanes) 24.

In the turbofan configuration of FIG. 1, propulsion fan 26 is positioned in bypass duct 28, which is coaxially oriented about the engine core along centerline (or turbine axis) C_{L}. An open-rotor propulsion stage 26 may also be provided, with turbine engine 10 operating as a turboprop or unducted turbofan engine. Alternatively, fan rotor 26 and bypass duct 28 may be absent, with turbine engine 10 configured as a turbojet or turboshaft engine, or an industrial gas turbine.

In the two-spool, high bypass configuration of FIG. 1, compressor section 12 includes low pressure compressor (LPC) 30 and high pressure compressor (HPC) 32, and turbine section 16 includes high pressure turbine (HPT) 34 and low pressure turbine (LPT) 36. Low pressure compressor 30 is rotationally coupled to low pressure turbine 36 via low pressure (LP) shaft 38, forming the LP spool or low spool. High pressure compressor 32 is rotationally coupled to high pressure turbine 34 via high pressure (HP) shaft 40, forming the HP spool or high spool.

Flow F at inlet 18 divides into primary (core) flow F_{P} and secondary (bypass) flow Fs downstream of fan rotor 26. Fan rotor 26 accelerates secondary flow F_{S} through bypass duct 28, with fan exit guide vanes (FEGVs) 42 to reduce swirl and improve thrust performance. In some designs, structural guide vanes (SGVs) 42 are used, providing combined flow turning and load bearing capabilities.

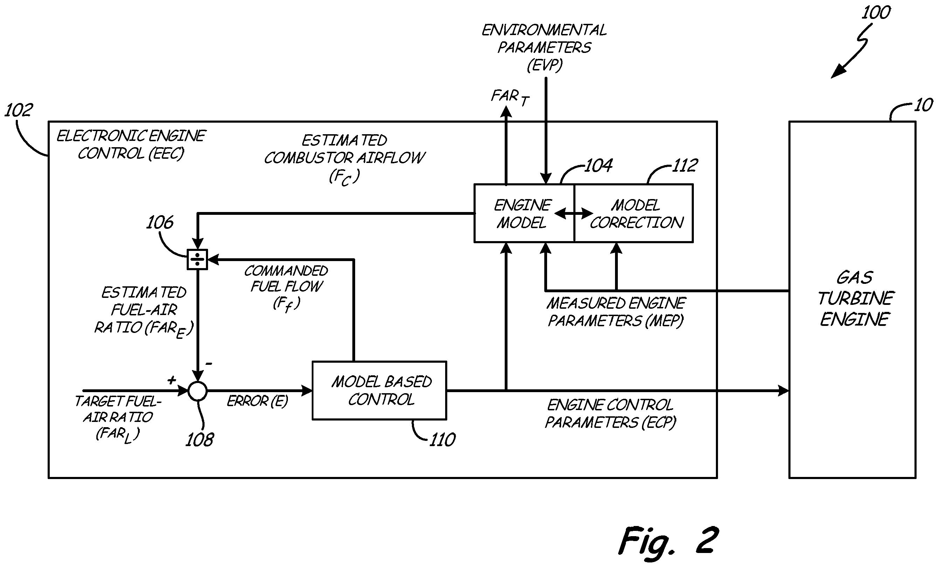

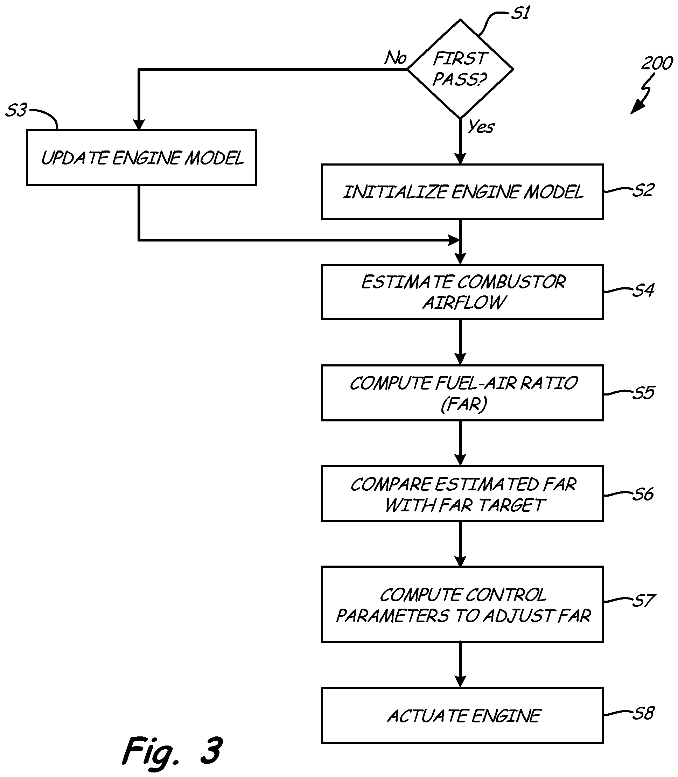

Primary flow F_{P} is compressed in low pressure compressor 30 and high pressure compressor 32. Some portion of primary flow Fₚ is diverted or bled from compressor section 12 for cooling and peripheral systems, and/or to avoid compressor stall. The remainder of primary flow Fₚ constitutes combustor airflow F_{c}, the airflow into combustor 14. Combustor airflow F_{c} is mixed with fuel flow F_{f} in combustor 14 and ignited to generate hot combustion gas. Fuel flow F_{f} is controlled to avoid violating a lean fuel-air ratio (FAR) limit corresponding to lean blowout, as described in further detail below with respect to FIGs. 2 and 3. Ignited combustion gas expands to provide rotational energy in high pressure turbine 34 and low pressure turbine 36, driving high pressure compressor 32 and low pressure compressor 30, respectively. Expanded combustion gases exit through exhaust section (or exhaust nozzle) 20, which can be shaped or actuated to regulate the exhaust flow and improve thrust performance.

Low pressure shaft 38 and high pressure shaft 40 are mounted coaxially about centerline C_{L}, and rotate at different speeds. Fan rotor (or other propulsion stage) 26 is rotationally coupled to low pressure shaft 38. Fan rotor 26 may also function as a first-stage compressor for gas turbine engine 10, and LPC 30 may be configured as an intermediate compressor or booster. Gas turbine engine 10 may be embodied in a wide range of different shaft, spool and turbine engine configurations, including one, two and three-spool turboprop and (high or low bypass) turbofan engines, turboshaft engines, turbojet engines, and multi-spool industrial gas turbines.

Operational parameters of gas turbine engine 10 are monitored and controlled by a control system including FAR control system 100, described below with respect to FIG. 2. FAR control system 100 monitors FAR in combustor 14, and controls estimated fuel-air ratio F_{f} to minimize risk of lean blowout.

FIG. 2 is a schematic block diagram of a FAR control system 100, comprising gas turbine engine 10 and electronic engine control 102 with engine model 104, ratio block 106, difference block 108, model based control block 110, and model correction 112. As described above with respect to FIG. 1, FAR control system 100 predicts and corrects FAR in combustor 14 to avoid lean blowout. The logic flow paths indicated in FIG. 2 reflect one time step in an iteratively repeating real time control process.

Electronic engine control system 102 is a digital controller that commands actuators of gas turbine engine 10 based on a specified FAR limit FAR_{L}, measured engine parameters MEP, and environmental parameters EVP. In particular, electronic engine control system 102 commands estimated fuel-air ratio F_{F} via engine control parameters ECP. Model-based control system 102 also utilizes calibration parameters (not shown) which are set at manufacture or during maintenance, and which do not vary substantially during engine operation. Measured engine parameters MEP may, for instance, include rotor speeds and sensed pressures and temperatures at inlet 18 of LPC 30 and at the outlet of HPC 32 into combustor 14.

Electronic engine control system 102 is comprised of five sections: engine model 104, compressor ratio block 106, difference block 108, model based control block 110, and model correction 112. These logic blocks represent distinct processes performed by electronic engine control 102, but may share common hardware. In particular, engine model 104, ratio block 106, model based control block 110, and model correction 112 may be logically separable software algorithms running on a shared processor or multiple parallel processors of a full authority digital engine controller (FADEC) or other computing device. This device may be a dedicated computer, or a computer shared with other control functions for gas turbine engine 10.

Engine model 104 is a logical block incorporating a model of gas turbine engine 10. In some embodiments, engine model 104 may be a component-level model describing only compressor section 12. In other embodiments, engine model 104 may be a system-level model describing the entirety of gas turbine engine 10. Engine model 104 may, for instance, be constructed based on the assumption that specific heats and gas constants within gas turbine engine 10 remain constant over one timestep. Similarly, engine model 104 may incorporate simplifying assumptions that unaccounted pressure losses across gas turbine engine 10 and torque produced by cooling bleed mass flow are negligible. The particular simplifying assumptions used by engine model 104 are selected for high accuracy during normal modes of operation of gas turbine engine 10, and may not hold during some exceptional operating conditions such as engine surge.

Engine model 104 produces a real time estimate of combustor airflow Fc based on environmental parameter EVP, engine measured engine parameters MEP, and engine control parameters ECP corresponding to a previous iteration of the logic process of compressor control system 100. In some embodiments, engine model 104 may also estimate limit fuel-air ratio FAR_{L}, an optimal or proper FAR selected to avoid lean blowout based on current flight conditions, as described in greater detail below. In further embodiments, engine model 104 may concurrently be used to estimate other current state parameters gas turbine engine 10 for other (non-FAR) control applications.

Ratio block 106 produces estimated fuel air ratio FAR_{E}. FAR_{E} is the ratio of fuel flow F_{f} to combustor airflow F_{c}. As shown in FIG. 2, fuel flow F_{f} may be a commanded fuel flow specified by model based control block 110. Alternatively, fuel flow F_{f} may be a sensed quantity from among measured engine parameters MEP. Difference block 108 takes the difference between estimated fuel-air ratio FAR_{E} and a commanded limit fuel-air ratio FAR_{L} to produce error E. In some embodiments, FAR_{L} may be estimated by engine model 104 as shown in FIG. 2 and described above. In other embodiments, FAR_{L} may be retrieved from a lookup table indexed by engine state variables predicted by engine model 104 and/or included in measured engine parameters MEP.

Model based control block 110 commands actuators of gas turbine engine 10 via engine control parameters ECP. Engine control parameters ECP reflect a plurality of engine operating parameters, including fuel flow F_{f}. In some embodiments, engine control parameters ECP may also include actuator commands for inlet guide vanes, bleed valves, and variable geometry stator vanes to adjust combustor airflow F_{c}, thereby providing an alternative or additional route to correct combustor fuel-air ratio. Model based control block 110 may perform other functions in addition to lean blowout avoidance via FAR control, in which case engine control parameters ECP may include a wide range of additional actuator commands. Model based control 110 determines engine control parameters at least in part based on error signal E. In particular, model based control 110 specifies commanded fuel flow F_{F} so as to correct for any fuel excess or deficiency indicated by FAR_{E}. If estimated fuel-air ratio FAR_{E} falls below limit fuel-air ratio FAR_{L}, model based control 110 will respond to resulting positive error E by adjusting fuel flow F_{f} upward via engine control parameters ECP.

Engine control parameters ECP are also received by engine model 104 in preparation for a next timestep. Model correction 112 updates engine model 104 for the next timestep, correcting for gradual drift due and deterioration of gas turbine engine 10. With the aid of model correction block 112, the approximation provided engine model 104 converges on actual engine behavior sufficiently quickly to ensure that the model remains a good predictor of actual engine values, but sufficiently slowly to avoid tracking noise in measured engine parameters MEP and environmental parameter EVP

FIG. 3 is a flowchart of control method 300, an exemplary method carried out by FAR control system 100 to avoid lean blowout. Control method 300 may be repeated many times during operation of FAR control system 100. Method 300 differentiates between first and subsequent passes. (Step S1). In the first iteration of method 300, engine model 104 is initialized using measured engine parameters MEP and control values corresponding to a default actuator state of gas turbine engine 10. (Step S2). In subsequent iterations of method 300, engine model 104 is updated using engine parameters ECP produced in previous iterations. (Step S3). Engine model 102 estimates combustor airflow F_{C} in real time. (Step S4). Ratio block 106 computes estimated fuel-air ratio FAR_{E} by dividing fuel flow F_{f} by estimated combustor airflow F_{c}. (Step S5). Fuel flow F_{f} may be measured directly, or may be specified by model based control 110. Difference block 108 produces error E as a means of comparing estimated fuel-air ratio FAR_{E} with limit fuel air ratio FAR_{L}. (Step S6). Error E is the difference between estimated fuel air ratio FAR_{E} and limit fuel-air ratio FAR_{L}. Model-based control block 110 computes engine control parameters ECP including fuel flow F_{f} to correct for error E. (Step S7). Finally, engine control parameters ECP are used both to actuate fuel flow and other engine parameters (Step S8).

FAR control system 100 meters fuel flow F_{f} based on an estimate of FAR derived from a current or previous-iteration value of fuel flow F_{f} and a realtime model-based estimation of combustor airflow F_{c}. Model-based estimation of combustor airflow F_{c} allows improved precision in FAR estimation over prior art indirect management of fuel air ratio FAR by means of pressure sensors. This improved accuracy in turn allows improved transient capability and reduced emissions of gas turbine engine 10 by enabling leaner operation of combustor 14 without risk of lean blowout.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A gas turbine engine comprising:
a compressor (30, 32), combustor (14), and turbine (34, 36) in flow series; and
an electronic engine control system (102) configured to estimate combustor fuel-air ratio based on a realtime model-based estimate of combustor airflow, and command engine actuators to correct for a difference between the estimated combustor fuel-air ratio and a limit fuel-air ratio selected to avoid lean blowout, wherein estimating combustor fuel-air ratio comprises dividing combustor fuel flow by the realtime model-based estimate of combustor airflow, wherein the electronic engine control system generates the limit fuel-air ratio in real time from an engine model, and the engine model is corrected for changes of the gas turbine engine.

2. The gas turbine engine of claim 1, wherein the engine model produces both the realtime model-based estimate of combustor airflow and the limit fuel-air ratio.

3. The gas turbine engine of any preceding claim, wherein the electronic engine control system commands engine actuators to correct for a difference between the estimated combustor fuel-air ratio and the limit fuel-air ratio by commanding a specified fuel flow into the combustor.

4. The gas turbine engine of claim 3, wherein the electronic engine control system commands engine actuators to correct for a difference between the estimated combustor fuel-air ratio and the limit fuel-air ratio further by controlling at least one of inlet guide vanes, bleed valves, and variable geometry stator vanes to adjust combustor airflow, thereby providing an alternative or additional route to correct combustor fuel-air ratio.

5. A method for controlling a gas turbine engine to avoid lean compressor blowout, the method comprising:
estimating current combustor airflow from measured engine parameters, environmental parameters, and an engine model;
producing a realtime estimated fuel-air ratio from combustor fuel flow and the estimated combustor airflow;
setting engine control parameters including a new fuel flow based on a difference between the realtime estimated fuel-air ratio and a limit fuel-air ratio produced in realtime by the engine model;
controlling actuators of the gas turbine engine based on the engine control parameters;
updating the engine model based on the engine control parameters, and
correcting the engine model to correct for changes of the gas turbine engine with respect to changes in measured parameters.

6. The method of claim 5, further comprising estimating the limit fuel-air ratio from the measured engine parameters, the environmental parameters, and the engine model.

7. The method of claim 5 or 6, wherein actuating the gas turbine engine based on the engine control parameters comprises metering fuel flow based on the engine control parameters.

## Patentansprüche

1. Gasturbinentriebwerk, umfassend:
einen Verdichter (30, 32), eine Brennkammer (14) und eine Turbine (34, 36) in Strömungsrichtung hintereinander; und
ein elektronisches Triebwerkssteuersystem (102), das zum Schätzen des Kraftstoff-Luft-Verhältnisses der Brennkammer basierend auf einer modellbasierten Echtzeitschätzung des Brennkammerluftstroms und zum Befehlen von Triebwerksaktoren konfiguriert ist, eine Differenz zwischen dem geschätzten Kraftstoff-Luft-Verhältnis der Brennkammer und einem Grenzwert des Kraftstoff-Luft-Verhältnisses zu korrigieren, der zum Vermeiden eines mageren Ausblasens ausgewählt ist, wobei das Schätzen des Kraftstoff-Luft-Verhältnisses der Brennkammer Dividieren des Kraftstoffstroms der Brennkammer durch die modellbasierte Echtzeitschätzung des Brennkammerluftstroms umfasst, wobei das elektronische Triebwerkssteuersystem den Grenzwert des Kraftstoff-Luft-Verhältnisses in Echtzeit anhand von einem Triebwerksmodell erzeugt und das Triebwerksmodell hinsichtlich Änderungen des Gasturbinentriebwerks korrigiert wird.

2. Gasturbinentriebwerk nach Anspruch 1, wobei das Triebwerksmodell sowohl die modellbasierte Echtzeitschätzung des Brennkammerluftstroms als auch den Grenzwert des Kraftstoff-Luft-Verhältnisses produziert.

3. Gasturbinentriebwerk nach einem der vorhergehenden Ansprüche, wobei das elektronische Triebwerkssteuersystem den Triebwerksaktoren befiehlt, eine Differenz zwischen dem geschätzten Kraftstoff-Luft-Verhältnis der Brennkammer und dem Grenzwert des Kraftstoff-Luft-Verhältnisses durch Befehlen eines angegebenen Kraftstoffstroms in die Brennkammer zu korrigieren.

4. Gasturbinentriebwerk nach Anspruch 3, wobei das elektronisches Triebwerkssteuersystem Triebwerksaktoren befiehlt, eine Differenz zwischen dem geschätzten Kraftstoff-Luft-Verhältnis der Brennkammer und dem Grenzwert des Kraftstoff-Luft-Verhältnisses ferner durch Steuern von mindestens einem von Einlassleitschaufeln, Abblaseventilen und Statorleitschaufeln mit variabler Geometrie zu korrigieren, um den Brennkammerluftstrom einzustellen, wodurch ein alternativer oder zusätzlicher Weg zum Korrigieren des Kraftstoff-Luft-Verhältnisses der Brennkammer bereitgestellt wird.

5. Verfahren zum Steuern eines Gasturbinentriebwerks zum Vermeiden von magerem Verdichterausblasen, wobei das Verfahren Folgendes umfasst:
Schätzen eines derzeitigen Brennkammerluftstroms anhand von gemessenen Triebwerksparametern, Umgebungsparametern und einem Triebwerksmodell;
Produzieren eines geschätzten Echtzeit-Kraftstoff-Luft-Verhältnisses anhand eines Brennkammerkraftstoffstroms und des geschätzten Brennkammerluftstroms;
Einstellen von Triebwerkssteuerparametern, die einen neuen Kraftstoffstrom beinhalten, basierend auf einer Differenz zwischen dem geschätzten Echtzeit-Kraftstoff-Luft-Verhältnis und einem in Echtzeit durch das Triebwerksmodell produzierten Grenzwert des Kraftstoff-Luft-Verhältnisses;
Steuern von Aktoren des Gasturbinentriebwerks basierend auf den Triebwerkssteuerparametern;
Aktualisieren des Triebwerksmodells basierend auf den Triebwerkssteuerparametern und
Korrigieren des Triebwerksmodells, um Änderungen des Gasturbinentriebwerks in Bezug auf Änderungen bei gemessenen Parametern zu korrigieren.

6. Verfahren nach Anspruch 5, ferner umfassend Schätzen des Grenzwerts des Kraftstoff-Luft-Verhältnisses anhand der gemessenen Triebwerksparameter, der Umgebungsparameter und des Triebwerksmodells.

7. Verfahren nach Anspruch 5 oder 6, wobei das Betätigen des Gasturbinentriebwerks basierend auf den Triebwerkssteuerparametern Dosieren des Kraftstoffstroms basierend auf den Triebwerkssteuerparametern umfasst.

## Revendications

1. Moteur à turbine à gaz, comprenant :
un compresseur (30, 32), une chambre de combustion (14) et une turbine (34, 36) en série dans le sens de l'écoulement ; et
un système de commande électronique de moteur (102) configuré pour estimer le rapport carburant-air de chambre de combustion sur la base d'une estimation du débit d'air de la chambre de combustion basée sur un modèle en temps réel, et commander à des actionneurs de moteur de corriger une différence entre le rapport carburant-air de chambre de combustion estimé et un rapport carburant-air limite sélectionné pour éviter un soufflage faible, l'estimation du rapport carburant-air de chambre de combustion comprenant la division du débit de carburant de la chambre de combustion par l'estimation du débit d'air de la chambre de combustion basée sur un modèle en temps réel, le système de commande électronique de moteur générant le rapport carburant-air limite en temps réel à partir d'un modèle de moteur, et le modèle de moteur étant corrigé pour les changements du moteur à turbine à gaz.

2. Moteur à turbine à gaz selon la revendication 1, dans lequel le modèle de moteur produit à la fois l'estimation du débit d'air de la chambre de combustion basée sur un modèle en temps réel et le rapport carburant-air limite.

3. Moteur à turbine à gaz selon une quelconque revendication précédente, dans lequel le système de commande électronique de moteur commande aux actionneurs du moteur de corriger une différence entre le rapport carburant-air de chambre de combustion estimé et le rapport carburant-air limite en commandant un débit de carburant spécifié dans la chambre de combustion.

4. Moteur à turbine à gaz selon la revendication 3, dans lequel le système de commande électronique de moteur commande à des actionneurs de moteur de corriger une différence entre le rapport carburant-air de chambre de combustion estimé et le rapport carburant-air limite en outre en commandant au moins certaines parmi des aubes directrices d'entrée, des vannes de purge et des aubes de stator à géométrie variable pour ajuster un débit d'air de chambre de combustion, fournissant ainsi une voie alternative ou supplémentaire pour corriger le rapport carburant-air de chambre de combustion.

5. Procédé de commande d'un moteur à turbine à gaz permettant d'éviter un soufflage de compresseur faible, le procédé comprenant :
l'estimation du débit d'air de chambre de combustion actuel à partir de paramètres de moteur mesurés, de paramètres environnementaux et d'un modèle de moteur ;
la production d'un rapport carburant-air estimé en temps réel à partir du débit de carburant de la chambre de combustion et du débit d'air de chambre de combustion estimé ;
le réglage de paramètres de commande de moteur comportant un nouveau débit de carburant sur la base d'une différence entre le rapport carburant-air estimé en temps réel et un rapport carburant-air limite produit en temps réel par le modèle de moteur ;
la commande d'actionneurs du moteur à turbine à gaz sur la base des paramètres de commande du moteur ;
la mise à jour du modèle de moteur sur la base des paramètres de commande du moteur ; et
la correction du modèle de moteur pour corriger des changements du moteur à turbine à gaz par rapport à des changements des paramètres mesurés.

6. Procédé selon la revendication 5, comprenant également l'estimation du rapport carburant-air limite à partir des paramètres de moteur mesurés, des paramètres environnementaux et du modèle de moteur.

7. Procédé selon la revendication 5 ou 6, dans lequel l'actionnement du moteur à turbine à gaz sur la base des paramètres de commande de moteur comprend la mesure du débit de carburant sur la base des paramètres de commande de moteur.
